# EUROPEAN PATENT SPECIFICATION

(11) **EP 2 482 628 B1**
(45) Date of publication and mention of the grant of the patent: **09.07.2014**
(21) Application number: 10766402.1
(22) Date of filing: 23.09.2010
(51) Int. Cl.: B65B 9/04, A01C 1/04, B31F 1/28, B65D 81/36

(54) **METHOD FOR MAKING SEED-CONTAINING MATERIALS FOR PACKAGING**
VERFAHREN ZUR HERSTELLUNG SAMENHALTIGER MATERIALIEN FÜR VERPACKUNGEN
PROCEDE POUR FABRIQUER DES MATERIAUX CONTENANT DES GRAINES POUR L'EMBALLAGE

(30) Priority: 29.09.2009 US 246779 P
(43) Date of publication of application: 08.08.2012
(73) Proprietor: LBP Manufacturing, Inc., Cicero, IL 60804 (US)
(72) Inventor: FU, Thomas, Z., Naperville, IL 60564 (US); COOK, Matthew, R., Hinsdale, IL 60521 (US)
(74) Representative: Nordic Patent Service A/S
(86) International application number: PCT/US2010/049979
(87) International publication number: WO 2011/041201

(56) References cited:
- EP-A1- 1 305 991
- GB-A- 2 330 998
- US-A1- 2008 005 046
- US-B1- 6 602 546

## Description

### BACKGROUND

In our increasingly fast-paced society, individuals are forced to eat on the run. Often, they purchase food and drinks from convenience stores, restaurants, and cafés which offer take out options. Take out options are typically packaged in, for example, disposable cups, plates, trays, bags or clamshells. After an individual consumes her food she can quickly dispose of the food packaging in a trash receptacle.

Some papermakers add seeds to paper, for example, to provide attractive stationary with seeds. The seeds are commonly integrated into the paper product manually during papermaking. For example, they begin by creating paper pulp from paper fragments, functional additives, and water and add to that some seeds and liquid starch before molding and screening the paper.

US 2008/0005046 A1 describes using new and recycled cardboard infused with fungi matched with seeds of plants, whereby the cardboard can be sprouted by end-users to start ecosystems. This document describes that spores and seeds may be mixed together and then immersed into a liquefied glue which is used with a thicker lower sheet of corrugated cardboard stock and/or corrugating medium and a thinner sheet of paper as the second face, thus allowing the seeds to more easily penetrate the thinner overlayer upon germination of the seeds.

### BRIEF SUMMARY

A method is disclosed for manufacturing a seed-containing material for a food or beverage container. The method is fully automated and uses roll or sheet materials such as single face material and fluted material. The container may be any type of food and beverage container such as a cup, plate, container sleeve, paper clam shell or tray. The method is automated by a machine or series of machines which convey the roll or sheet material to one or more work stations for processing into a seed-containing material. During the process, seeds and a securing material, such as an adhesive, are added to the roll or sheet material and the materials are laminated. The resulting seed-containing material is then conveyed for further processing including removal of the blanks from the sheet material and folding into the final product. The final product may be planted in a yard, garden, or flower pot to yield flowers, plants, or trees.

Other systems, methods, features and advantages of the disclosure will be, or will become, apparent to one with skill in the art upon examination of the following figures and detailed description. It is intended that all such additional systems, methods, features and advantages be included within this description, be within the scope of the invention, and be protected by the following claims.

### BRIEF DESCRIPTION OF THE DRAWINGS

Figure 1 is a view of a first exemplary machine.
Figure 2 is a flow chart demonstrating an exemplary process for making seed-containing materials for packaging.
Figure 3 is a first arrangement of a seed-containing material.
Figure 4 is a second arrangement of a seed-containing material.
Figure 5 is a third arrangement of a seed-containing material.
Figure 6 is a fourth arrangement of a seed-containing material.
Figure 7 is a fifth arrangement of a seed-containing material.
Figure 8 is a sixth arrangement of a seed-containing material.
Figure 9 is a view of a second exemplary machine.
Figure 10 is a view of an exemplary container made from the seed-containing material.
Figure 11 is a view of a sleeve for the exemplary container of Figure 10.

### DETAILED DESCRIPTION

Societies and the individuals that inhabit them are becoming increasingly interested in reducing the environmental impact of consumerism. Environmental issues dominate popular media, news, entertainment, and even political campaigns. In light of this, corporations and the service industry are searching for ways to demonstrate commitment to environmental leadership and to fulfill customer demand by offering environmentally friendly options. Corporations and the service industry also enjoy providing environmental awareness promotional items.

Food packaging may be made multi-purpose, such as food packaging that incorporates plant seeds. After consuming the contents of the food packaging, an individual may plant the packaging in their yard, garden, window box, flower pot, or otherwise. From that packaging, they may receive fresh flowers or other plants or trees. This form of packaging may be used as a standard packaging or as an attractive promotional item.

The multi-purpose food packaging may be recycled or thrown away. If the packaging ends up in a landfill, it provides an advantage of germinating and contributing to the breakdown of rubbish and the removal of the greenhouse gas and carbon dioxide from the atmosphere. Plants and trees are an effective means of removing carbon dioxide because they transfer carbon dioxide into carbohydrates and oxygen. The plants and trees may also improve the appearance of landfills.

Packaging materials integrating plant and tree seeds may be produced by the following machines and the methods at a rate, quality, and efficiency that may be superior to other paper making techniques. Because the seeds are exposed to moisture and heat during production, the types and sizes of the seeds may be chosen to take into consideration this moisture content and heat. In one embodiment, snapdragon flower seeds have been used and tested with favorable results, with roughly 2% to 30% of seeds planted germinated.

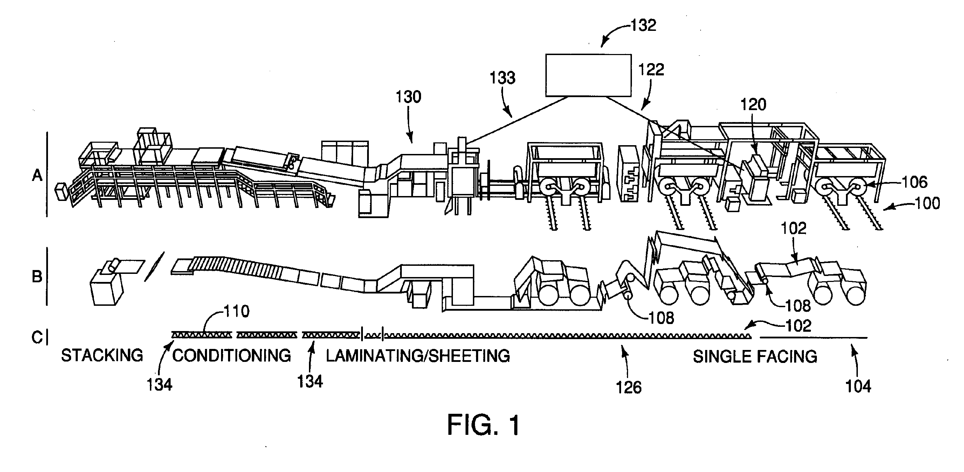

Figure 1 illustrates a sheet-material-processing machine system **100** for carrying out a process for manufacturing packaging materials containing seeds. For example, but not limited to, the Asitrade microflute lamination machine can be used by this method to make seed-containing paper materials. The illustration provides three parallel views of a process: a view of the machinery **A**, a view of a manner in which the sheet material may travel through the machine system **B**, and a cross-section view of the resulting manufactured substrate material **C**. The machine system **100** may extend longitudinally over a considerable length and may include a number of work stations along its length. As displayed in Figure 1, the sheet material being processed moves from right to left through the machine system **100**.

The machine system **100** may use a first sheet material **102** which may be provided in bulk as a roll or web. Accordingly, the term "sheet" is not to be limited to the source of the material or how it is delivered, e.g., the sheet material may come off a roll and/or come in the form of a web as well as be delivered as individual sheets. The first sheet material **102** may be fed into the machine system **100** and through the various steps of the process by a wheel-based, belt- based, or other conveyance system. Figure 1 illustrates the use of a wheel-based system. Alternatively or additionally, the machine system **100** may use sheet material which may be pre-printed. The final seed-containing substrate materials produced using machine 100 may be further converted to many packaging products, for example, but not limited to being die-cut with the pattern or blank of the particular packaging, for example, blanks of cups, containers, plates, clam shells, trays, bags or beverage container holders, among others.

The first sheet material **102** may be composed of a generally-flat material having some rigidity and being capable of being bent or scored to facilitate bending along determined lines. For example, but not limited to, the sheet material **102** may be selected from a variety of paper, such as Kraft paper, clay-coated news board, white-top liner, containerboards, SBS (solid bleached sulfate) boards or other materials. The material may be treated, such as to provide increased water or fluid resistance and may have printing on selected portions of the material. The first sheet material **102** may be made of recyclable materials or may be compostable, biodegradable, or a combination of these.

The first sheet material **102** may be conveyed by roller **108** to a first work station **120**. The first work station **120** may be a corrugating station, which could be by-passed if material 102 does not need to be corrugated. For example, the first work station **120** may include a source of steam. The steam may be applied to the first sheet material **102**. The first work station **120** may also include a corrugating roll. The corrugating roll may shape the first sheet material **102** into a series of waves or flutes. The first work station **120** may also include an applicator which may apply a securing or bonding material to a side of the first sheet material **102**. For example, the applicator may be a metering roll applicator with a trough containing a securing material, such as an adhesive. The trough may be stationed near a corrugating roll such that the adhesive is applied to the tips of the waves or flutes generated by the corrugating roll. Additionally or alternatively, the securing material may be applied by spraying, brushing, or otherwise. For example, an applicator may apply the securing material by spraying it onto a side of the first sheeting material **102**. The spray from the applicator may be constant or intermittent and may create broken lines, stripes, dots, or ellipses of securing material. Designs and patterns may be applied by moving the applicator or by moving the first sheet material **102** relative to the sprayer.

The securing material may be, for example, an adhesive, a thermal insulating material, or other materials or coatings, for example, those with securing properties. For example, the securing material may be a starch adhesive, or any other adhesives.

The securing material may be delivered to the applicator from a line **122**, which may originate at a seed conditioning and preparation station **132**. The securing material may be premixed with seeds at a seed conditioning and preparation station **132** before or during delivery to the applicator of the first work station **120**.

The first sheet material **102** may be incorporated with a second sheet material **104**, for example, by pressing the second sheet material **104** to the first sheet material **102**. The second sheet material **104**, which may be a liner, may be secured to the first sheet material **102** by the securing material resulting in a two-layer sheet material **126**, such as single-face fluted sheeting as shown in Figure 1, C. If the adhesive is a seed-containing adhesive, the two layer sheet material **126**, e.g., single-face fluted sheeting, may contain a layer of seeds between the second sheet material **104**, which may be a liner, and the first sheet material **102** which may be a fluted medium. Alternatively, the second sheet material **104** and the first sheet material **102** may not include a layer of seeds therebetween.

A seed-containing two layer sheet material **126**, such as a single-face fluted sheeting, may exit the machine system **100** and go on to further processing (e.g., die cutting, printing, folding, etc.) into the desired final product. Alternatively, the seed-containing or non-seed-containing two-layer sheet material **126**, such as a single-face fluted sheeting, may be further processed by the machine system **100** as described below.

The sheet material, which may be seed-containing or non-seed-containing two-layer sheet material **126** may be conveyed to a second work station **130**. The second workstation **130** may include an applicator which may apply a securing material, such as a seed-containing securing material, to a side of the two-layer sheeting **126**, which may be single-face fluted sheeting. For example, the applicator may apply a securing material, such as a seed-containing securing material, to the second sheet material **104** side of the two layer sheeting **126**, which may be the liner side of the two layer sheeting **126**. Alternatively or additionally, the applicator may apply a securing material, such as a seed-containing securing material, to the first sheet material **102** side of the two layer sheeting **126**. The securing material may be an adhesive, a coating material, a finishing material, or otherwise. For example, the securing material may be a cold set or a hot set adhesive, for example a hot-melt adhesive, starch-based adhesive, natural polymer adhesive, cellulose based adhesive, glue, hot melt glues, cold set glues, binder, polymeric binder, foams, and etc.

The securing material may be applied by spraying, brushing, or otherwise. For example, the applicator may be a trough containing a securing material. The trough may be stationed near the roll which feeds the paper into the second work station **130** such that the securing material is applied to the tips of the waves or flutes generated by the corrugating roll. As a second example, an applicator may apply the securing material by spraying it onto a side of the first sheeting material **102** the second sheeting material **104** or both. The spray from the applicator may be constant or intermittent and may create broken lines, stripes, dots, or ellipses of securing material. Designs and patterns may be applied by moving the applicator or by moving the first sheet material **102** relative to the sprayer. The securing material may be premixed with seeds at one or several separate seed conditioning and preparation station **132** before or during delivery to the applicator, for example, through a line 1**3**3.

The two-layer sheeting material **126** may be incorporated with a third sheet material **110**, which may be a second liner, for example, by pressing the third sheet material **110** to the two layer sheeting **126** creating a three-layer seed-containing sheet material **134** also referred to as a single wall sheet material. Further processing may be performed to add another fluted sheet and another liner sheet, in that order, to the three-layer seed-containing material using additional securing material layers to optionally create a double wall seed-containing sheet material.

The third sheet material **110** may be composed of a generally-flat material having some rigidity and being capable of being bent or scored to facilitate bending along determined lines. For example, the third sheet material **110** may be single-face liner paper, for example but not limited to Kraft paper. The material may be treated, such as to provide increased water or fluid resistance and may have printing on selected portions of the material. Alternatively or additionally, the third sheet material **110** may be composed of corrugated cardboard, chipboard, SBS, metalized paper, plastic, polymer, fibers, composite, mixtures or combinations of the foregoing, and the like. The third sheet material **110** may be made of recyclable materials or may be compostable, biodegradable, or a combination of these.

The second work station **130** may be a laminator. The layers may be laminated which may improve the structural integrity and appearance of the resulting seed-containing packaging material. The temperature during the lamination process may be optimized to maintain seed integrity and improve germination fidelity.

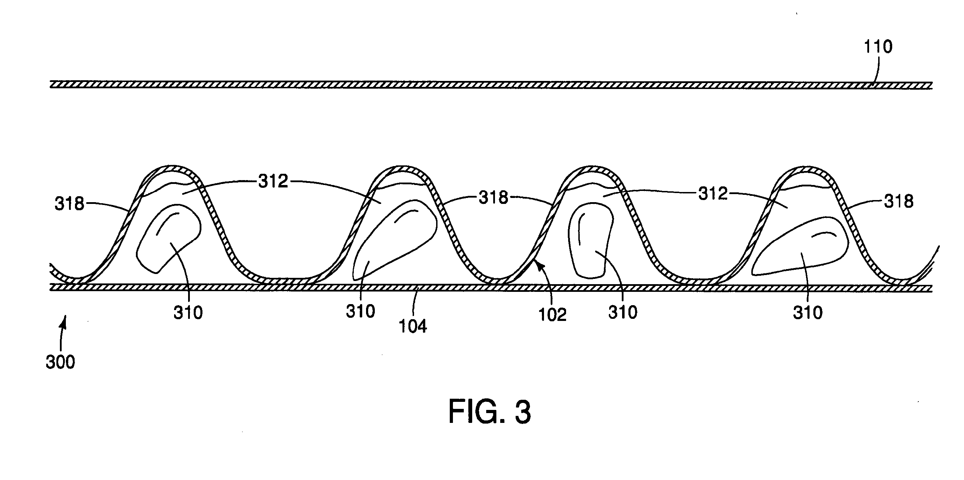

Figures 3-8 provide examples of greater detail of some possible arrangements of the layers of sheet material and layer of seeds. Other configurations are possible and envisioned. The final seed-containing packaging material may be conveyed to final processing such as sheeting the final seed-containing substrate, die cutting, removing the blanks from the sheet material, and folding the blanks into a final product.

As discussed above, securing material used in the process may be a seed-containing adhesive. Seeds may be added to the adhesive at a seed conditioning and preparation station **132**, or at several of these kinds of stations. The seed-containing securing material may then be loaded into an applicator for application to the sheet material.

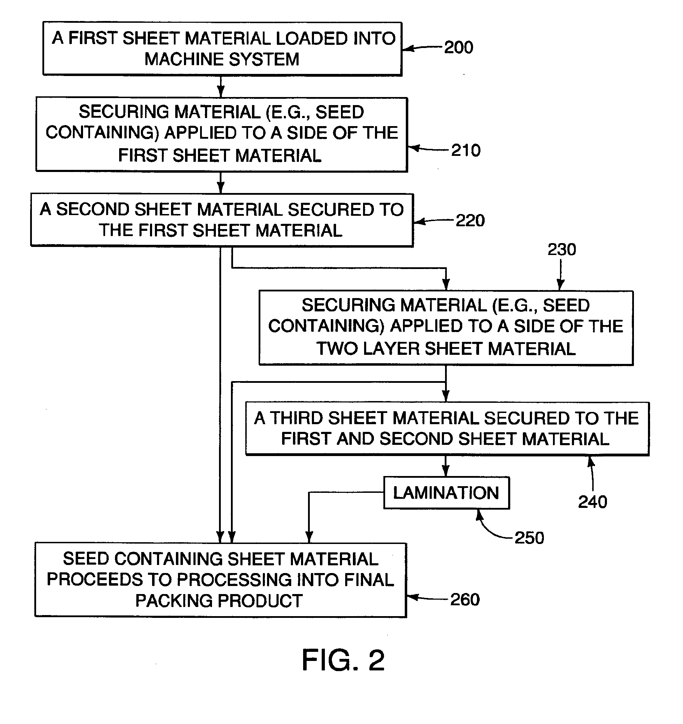

Figure 2 is a flow chart which illustrates a possible sequence of events of the method. A first (sheet) material may be loaded into a machine system, at block **200**. A securing material may be applied to a side of the first sheet material, at block **210**. The securing material may include seeds. A second (sheet) material may be secured to the first sheet material, at block **220**, which may create a two-layer sheet material. The two-layer sheet material may contain seeds and may exit the process to be processed (e.g., printed, die cut, removed from blanks, assembled), at block **260**. Alternatively, a securing material may be applied to a side of the two-layer sheet material, at block **230**. The securing material may contain seeds. The two-layer sheet material may contain seeds and may exit the process to be processed (e.g., printed, die cut, removed from blanks, assembled), at block **260**. Alternatively, a third sheet material may be secured to the first and second sheet materials, at block **240**. The sheet material, seeds, and securing material may be treated by a laminator which may secure the seeds to the sheet material, at block **250**. The resulting seed-containing sheet material may exit the process to be processed (e.g., printed, die cut, removed from blanks, assembled), at block **260**.

For example, the resulting sheet material may be further processed such as by application and subsequent removal of packaging blanks from the sheet material and assembly of the blanks into the final product, at block **260**. The final product of the process (which may be, e.g., a cup, container holder, container sleeve, clamshell, tray, or otherwise) may be made of one or more layers of one or more of the aforementioned materials. Where multiple layers of material are used they may be joined, such as, but not limited to, being laminated, glued, or otherwise fastened together for increased strength.

Figure 3 illustrates one exemplary arrangement of seeds and sheet material. In this arrangement, the resulting seed-containing sheet material **300** includes a first sheet material **102**, a second sheet material **104**, and a third sheet material **110**. The second sheet material **104** is a single wall flat material, the first sheet material **102** is a fluted material (e.g., E-flute or F-flute), and the third sheet material **110** is a single wall flat material, such as Kraft paper. In this example, seeds **310** may be secured between the first sheet material **102** and the second sheet material **104**. During the process, the seeds **310,** which are mixed into a securing material **312,** may be applied to the flutes of the first sheet material **102** before the second sheet material **104** is adhered to the first sheet material, thus locating the seed-containing securing material **312** underneath the hills between flutes **318** of the fluted material **102.** The securing material **312** may partially or completely fill the space between the flutes **318** of the fluted material **102.** The third sheet material **110** may then be applied to the other side of the fluted, first sheet material **102** with a securing material that does or does not include seeds.

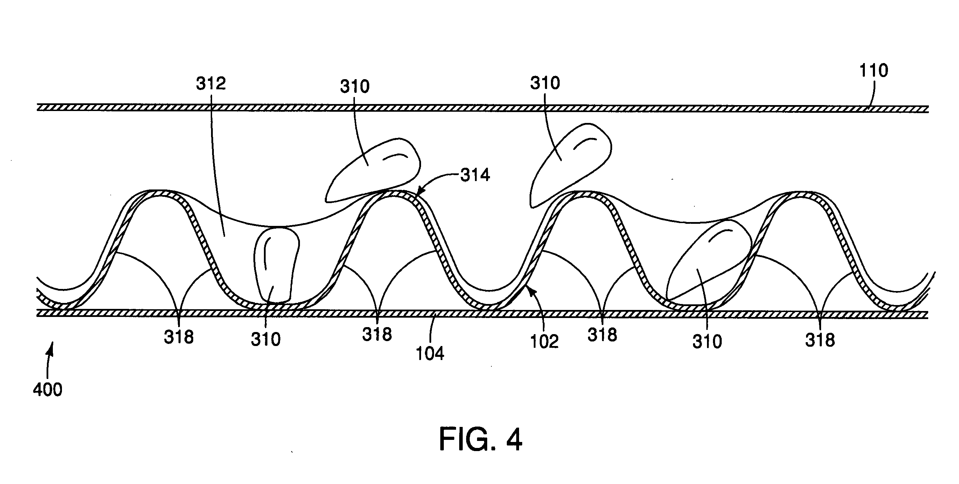

Figure 4 illustrates a second exemplary arrangement of seeds and sheet material. In this arrangement, the resulting seed-containing sheet material **400** also includes the first sheet material **102,** the second sheet material **104,** and the third sheet material **110.** The second sheet material **104** is a single wall flat material, the first sheet material **102** is a fluted material (e.g. E-flute or F-flute), and the third sheet material **110** is a single wall flat material, such as Kraft paper. In this example, arrangement of the seeds **310** is to secure between the first sheet material **102** and the third sheet material **110.** During the process, the seeds **310,** which are mixed into the securing material **312,** may be applied to the flute tips **314,** in the valley between the flutes **318,** or both. The securing material **312** may closely coat the seeds **310** or, alternatively, the securing material 312 may completely fill the space between the first sheet material **102** and the third sheet material **110**.

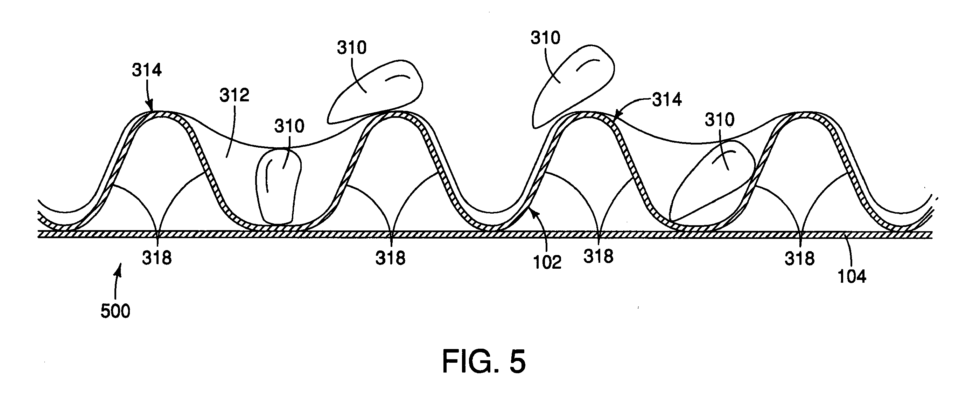

Figure 5 illustrates a third exemplary arrangement of seeds and sheet material. In this arrangement, the resulting seed-containing sheet material **500** includes the first sheet material **102** and the second sheet material **104,** creating a single-wall arrangement with the seeds secured to a side of the first sheet material **102.** The second sheet material **104** is a single wall flat material such as Kraft paper and the first sheet material **102** is a fluted material (e.g., E-flute or F-flute). In this example, the seeds **310** are applied to a side of the first sheet material **102.** During the process, the seeds **310,** which are mixed into the securing material **312,** may be applied to the flute tips **314,** in the valley between the flutes **318,** or both. The securing material **312** may closely coat the seeds or, alternatively, overfill the valley between the flutes **318** creating a smooth outer surface of securing material **312.**

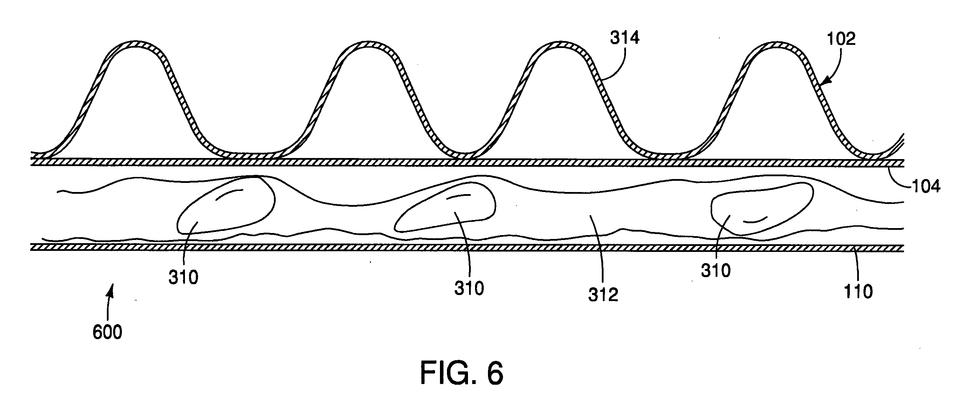

Figure 6 illustrates a fourth exemplary arrangement of seeds **310** and sheet material. In this arrangement, the resulting seed-containing sheet material **600** includes a first sheet material **102,** a second sheet material **104,** and a third sheet material **110.** The second sheet material **104** is a single wall flat material, the first sheet material **102** is a fluted material (e.g., E-flute or F-flute), and the third sheet material **110** is a single wall flat material, such as Kraft paper. In this example, the seeds are secured between the second sheet material **104** and the third sheet material **110,** and the first sheet material **102** is located on a side of the second sheet material **104** opposite from the third sheet material **110.** During the process, the seeds **310,** which are mixed into the securing material **312,** may be applied to the side of the second sheet material **104** that faces away from the first sheet material **102.** The securing material **312** may closely coat the seeds or, alternatively, it may completely fill the space between the second sheet material **104** and the third sheet material **110.**

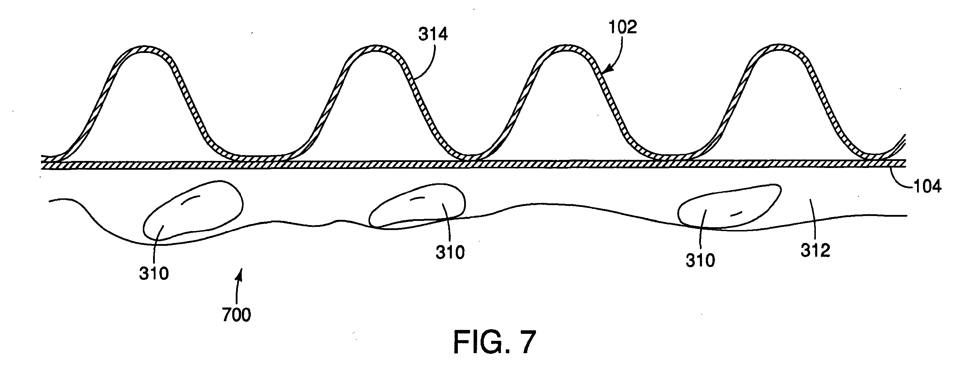

Figure 7 illustrates a fifth exemplary arrangement of seeds **310** and sheet material. In this arrangement, the resulting seed-containing sheet material **700** includes a first sheet material **102** and a second sheet material **104,** creating a single-face material with the seeds secured to a side of the first sheet material **102.** The second sheet material **104** is a single wall flat material such as Kraft paper and the first sheet material **102** is a fluted material (e.g., E-flute or F-flute). In this example, the seeds **310** are applied to the side of the second sheet material **104** that faces away from the first sheet material **102.** The securing material **312** may closely coat the seeds or, alternatively overfill the seeds **310** creating a smooth outer surface of securing material **312.**

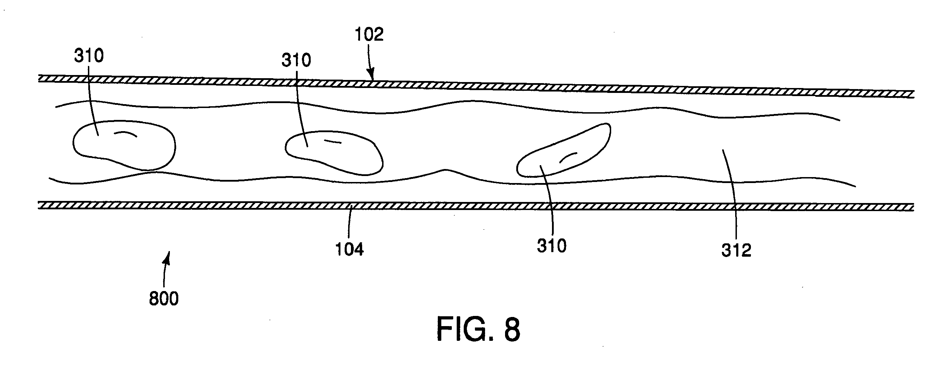

Figure 8 illustrates a sixth exemplary arrangement of seeds **310** and sheet material. In this arrangement, the resulting seed-containing sheet material **800** includes a first sheet material **102,** and a second sheet material **104.** The first sheet material **102** is a single wall flat material and the second sheet material **104** is also a single wall flat material, such as Kraft paper. In this example, the seeds **310** are secured between the first sheet material **102** and the second sheet material **104.** During the process, the seeds **310,** which are mixed into the securing material **312,** may be applied either to a side of the first sheet material **102** or a side of the second sheet material **104.** The securing material **312** may closely coat the seeds or, alternatively, may completely fill the space between the first wall of the first sheet material **102** and the second wall of the second sheet material **104.**

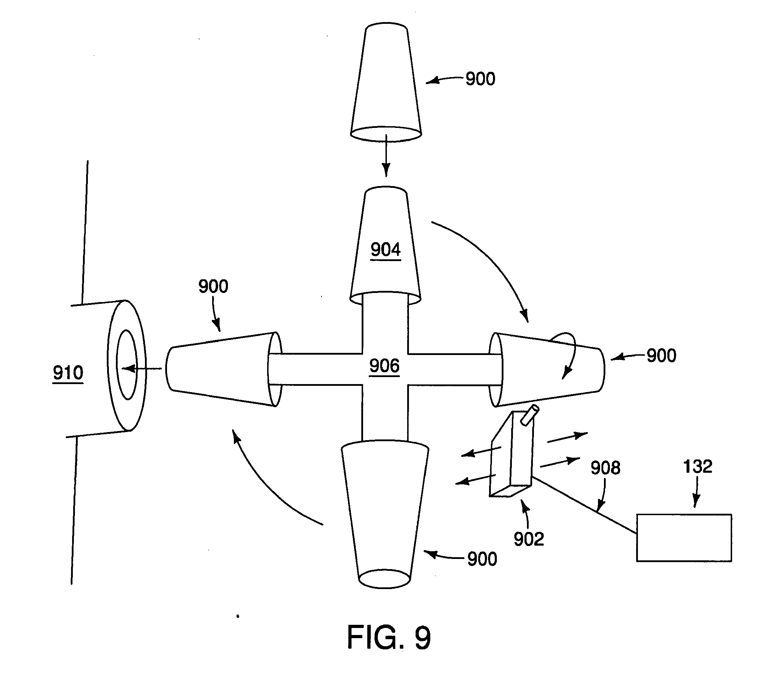

Figure 9 illustrates a second exemplary method of making seed-containing consumer products. Seed-containing cups, tubs, bowls, and other items may be manufactured by applying a seed-containing securing material **312** to a preformed container **900.** In this example, the method may be adapted to a container-wrapping machine. The seed-containing securing material **312** may be applied continuously or intermittently via an applicator **902** such as a nozzle, glue gun, or slot die applicator onto the outside of, e.g., a container **900** which may be secured to a mandrel **904.** The pattern of seed-containing securing material **312** may be manipulated by movement of the container **900** relative to the applicator **902.** For example, the mandrel **900** may be spun and/or moved up or down or in another direction to achieve a desired pattern, e.g., spiral, dotted, lined, and the like.

Alternatively or additionally, the applicator **902** may move relative to the container **900** to achieve a desired pattern. For example, mandrels **904** may be arranged on a rotating arm **906.** A container **900** may be loaded onto the mandrel **904** manually or be fed by machine. The arm **906** may move the container **900** proximate to the applicator **902.** The applicator **902** may apply patterns of seed-containing securing material **312** to the container **900** by moving relative to the container **900.** The mandrel **904** may also move the container **900** relative to the applicator **902,** such as by rotation. As an example, stripes may be applied to the cup by side-to-side movement of the applicator **902** combined with rotational movement of the mandrel **904**. The spray from the applicator **902** may be constant or intermittent and may create broken lines, stripes, dots, or ellipses of foam. Swirls may be applied by constant spray from the applicator **902** combined with side movement and rotation of the mandrel **904.**

The applicator **902** may be attached to a line **908** which may deliver the seed-containing securing material **312,** for example, from a seed preparation and mixing station **132.** After the seed-containing securing material **312** has been applied, the arm **906** may move the container **900** to a different position where the cup may be removed from the mandrel for further processing. For example, an integrated, double-wall container may be formed by inserting the container **800** into an outer wall. The outer wall may be preformed and located in a cavity **810** into which the container **900** may be inserted.

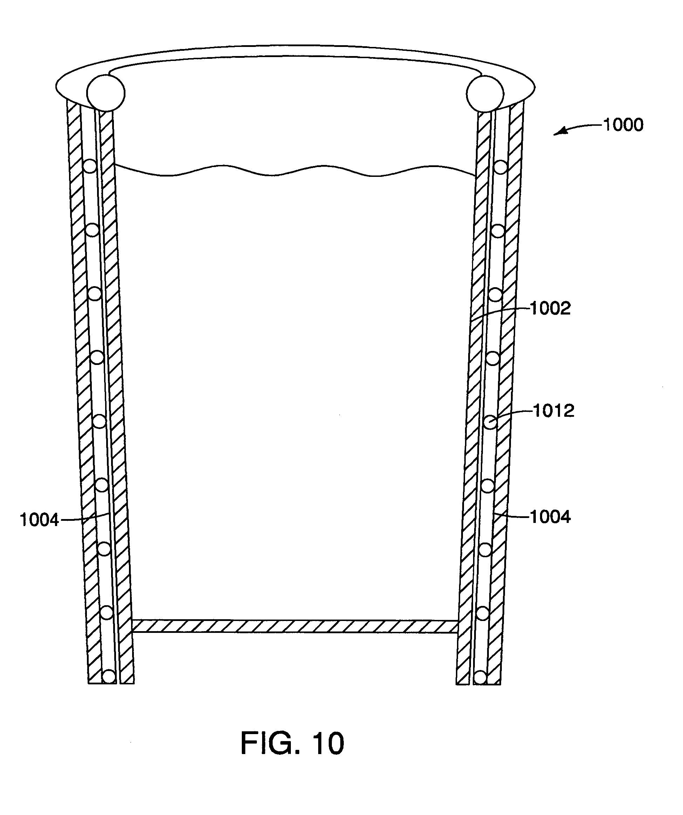

Figure 10 illustrates a cross sectional view of an exemplary seed-containing container **1000**. Although Figure 10 illustrates a liquid container, it could be any container, such as a cup, soup tub, a pop corn tub, or otherwise. The seed-containing container **1000** may have an inner wall **1002** and an outer wall **1004.** The inner wall **1002** of the container **1000** may be of a preformed container **900** such as in Figure 9. There may be a layer of seed-containing securing material **1012** between the inner wall **1002** and the outer wall **1004.**

Additionally or alternatively, the seed-containing securing material 1012 may be applied during the final processing steps, such as when blanks for cups, sleeves, clam shells, trays, are being folded into their final conformation or form.

After a final product, such as a container, cup, container sleeve, clamshell, or tray has been used, an end user may plant the item in a flower pot, in the yard, in a garden, or otherwise.

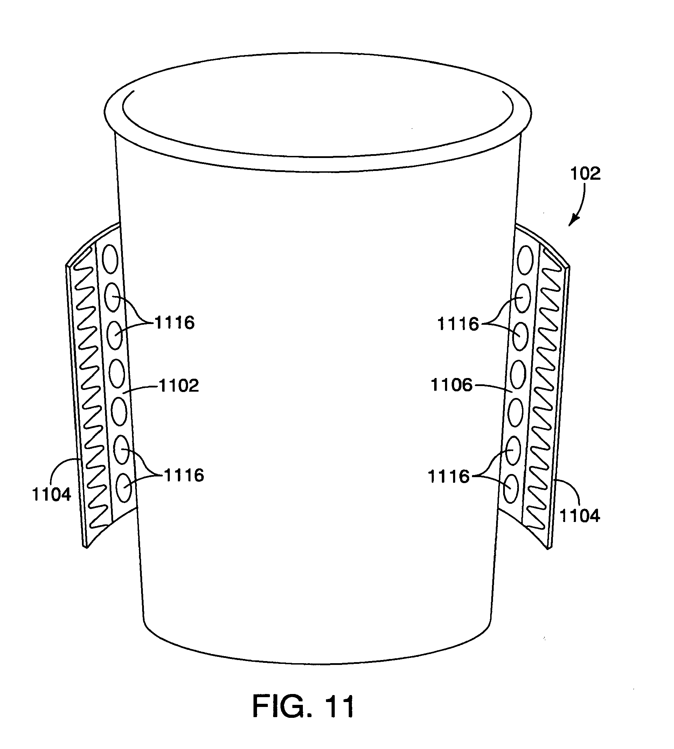

For instance, Figure 11 illustrates a cross section of the outer wall 1104, such as a sleeve, assembled with the container **1000.** This Figure is meant to be illustrative and not limiting. The cup may be replaced with any container, for example, a press-formed tray, a soup tub, or a bulk beverage container. The outer wall **1104** may have an inner face **1106** and an outer face **1104.** An insulating material **1116** may be applied to the inner face **1106,** the outer face **1104,** and/or to a surface **1102** between the inner face **1106** and the outer face **1104,** such as to an inner wall of the sleeve. The inner face **1106** and outer face **1104** do not necessarily contain a space **1102** therebetween.

The insulating material **1116** which may or may not contain seeds, such as an expandable material, may be applied to an inner face **1106** of the outer wall **1104** in an inactive form. The inactivated insulating material **1116** may be applied as a thin film that does not materially alter the thickness of the outer wall **104.** Applying the insulating material **1116** to the inside of the outer wall **1104** may also maintain the printability of the outer face of the outer wall **1104.**

The securing material **312** and the insulating material **1116**, when used, may be largely free of fertilizers, pesticides, nitrogen fixing bacteria, spores, or other growth factors. This may decrease the cost of making the product and may also increase the safety of using the product in consumer products meant to be used with food items.

While various embodiments of the invention have been described, it will be apparent to those of ordinary skill in the art that many more embodiments and implementations are possible that are within the scope of the invention. For instance, steps of a method as displayed in the figures or reflected in the below claims do require a specific order of execution by the way they are presented, unless specified. The disclosed steps are listed as exemplary such that additional or different steps may be executed or the steps may be executed in a different order.

## Claims

1. A method of manufacturing a seed-containing material for a food or beverage container, comprising:
passing a first sheet material (102) into a sheet-material-processing machine system, the first sheet material (102) having at least two sides;
adhering a first side of a second sheet material (104) to a first side of the first sheet material (102);
pre-mixing seeds (310) and a securing material (312) before loading the first securing material into the machine system;
applying the securing material (312) to a second side of the first or second sheet material (102, 104), the securing material (312) including the seeds (310) and being substantially free of pesticides, fertilizers, nitrogen fixing bacteria, spores and growth agents, resulting in a first final sheet material; and
processing the first final sheet material into a final product for containing a food or beverage for consumption.

2. The method of any of claim 1, further comprising:
corrugating the first sheet material (102) before passing it into the machine system, where the first sheet material (102) is a single-face corrugated paper.

3. The method of any of claims 1-2, further comprising:
selecting a type and size of the seeds (310) for pre-mixing into the securing material (312) according to moisture content of the securing material (312) and according to an amount of heat applied to the first or second sheet materials (102, 104) during manufacturing.

4. The method of any of claims 1 to 3, where the second sheet material (104) is a single-face corrugated paper board comprising fluting, and where the securing material (312) is applied on the side of the first sheet material (102) to which the second sheet material (104) is applied.

5. The method of any of claims 1 to 4, further comprising:
applying a second securing material to the second side of the second sheet material (104) the second securing material being substantially free of pesticides, fertilizers, nitrogen fixing bacteria, spores and growth agents;
applying a third sheet material (110) to the securing material;
laminating the first sheet material (102), the second sheet material (104) and the third sheet material (110), resulting in a second final sheet material; and
processing the second final sheet material into the final product.

6. The method of claim 5, further comprising:
adding seeds (310) to the securing material.

7. The method of any of claims 5 to 6, where the first and third sheet materials (102, 110) comprise liners, the method further comprising:
applying a securing material to one of the liners;
adhering a fourth, fluted sheet material to the securing material;
applying a securing material to the fourth, fluted sheet material;
adhering a fifth sheet material comprising a liner to the fourth, fluted sheet material; and
laminating the first through fifth sheet materials to create a double-wall sheet final product.

8. The method of any of claims 1 to 7, where any of the securing materials comprises an adhesive.

9. The method of claim 8, where the adhesive is a starch-based adhesive.

10. The method of any of claims 1 to 9, further comprising:
mixing seeds into the securing material at a preparation station.

11. A container adapted to carry a food or beverage for consumption formed from a sheeting comprising:
first and second sheet materials (102, 104) adhered to each other in a sheet-material-processing machine system, where the first sheet material (104) comprises corrugated paper board having fluting and the second sheet material (102) comprises a liner, to form a single wall corrugated paper board; and
a securing material applied to an outside of either the first or the second sheet material (102, 104), **characterised in that** the securing material has mixed therewith a plurality of seeds (310) and being substantially free of pesticides, fertilizers, nitrogen fixing bacteria, spores and growth agents.

12. The container of claim 11, where the securing material is applied to the outside of the liner, and where the sheeting further comprises:
a third sheet material (110) adhered to the liner.

13. The container of claim 12, where the third sheet material (110) comprises a second liner.

14. The container of any of claims 11 to 13, where the seeds comprise snapdragon flower seeds, and where the securing material comprises a starch-based adhesive.

15. The container of any of claims 11 to 14, where the container formed comprises a container selected from the group consisting of: a double wall cup, a single wall cup, a plate, a container sleeve, a clam shell, a bag and a tray.

## Patentansprüche

1. Verfahren zur Herstellung eines Samen-enthaltenden Materials für einen Lebensmittel- oder Getränkebehälter, wobei das Verfahren folgendes umfasst:
Einführen eines ersten Blattmaterials (102) in ein Blattmaterial-Verarbeitungsmaschinen-System, wobei das erste Blattmaterial (102) wenigstens zwei Seiten aufweist;
Anhaften einer ersten Seite eines zweiten Blattmaterials (104) an einer ersten Seite des ersten Blattmaterials (102);
Vormischen von Samen (310) und eines Sicherungsmaterials (312) vor dem Einführen des ersten Sicherungsmaterials in das Maschinensystem;
Anwenden des Sicherungsmaterials (312) auf einer zweiten Seite des ersten oder zweiten Blattmaterials (102, 104), wobei das Sicherungsmaterial (312) die Samen (310) umfasst, und im Wesentlichen frei von Pestiziden, Düngemitteln, stickstoffbindenden Bakterien, Sporen und Wachstumsmitteln ist, wobei ein erstes fertiges Blattmaterial erhalten wird; und
Verarbeiten des ersten fertigen Blattmaterials zu einem fertigen Produkt zur Aufnahme von Lebensmitteln oder Getränken zum Verzehr.

2. Verfahren nach Anspruch 1, ferner umfassend:
Wellen des ersten Blattmaterials (102), bevor es in das Maschinensystem gegeben wird, wobei das erste Blattmaterial (102) ein einseitig gewelltes Papier ist.

3. Verfahren nach einem der Ansprüche 1 bis 2, ferner umfassend:
Auswählen der Art und Größe der Samen (310) zum Vormischen mit dem Sicherungsmaterial (312) entsprechend dem Feuchtigkeitsgehalt des Sicherungsmaterials (312) und entsprechend einer Menge an Wärme, die auf den ersten und zweiten Blattmaterialien (102, 104) während der Herstellung angewendet wird.

4. Verfahren nach einem der Ansprüche 1 bis 3, wobei das zweite Blattmaterial (104) eine Wellpappe ist, bei der nur eine Seite gewellt ist, umfassend eine Riffelung, und wobei das Sicherungsmaterial (312) auf der Seite des ersten Blattmaterials (102) angewendet wird, auf welche das zweite Blattmaterial (104) angewendet wird.

5. Verfahren nach einem der Ansprüche 1 bis 4, ferner umfassend:
Anwenden eines zweiten Sicherungsmaterials auf der zweiten Seite des zweiten Blattmaterials (104), wobei das zweite Sicherungsmaterial im Wesentlichen frei von Pestiziden, Düngemitteln, stickstoffbindenden Bakterien, Sporen und Wachstumsmitteln ist;
Anwenden eines dritten Blattmaterials (110) auf das Sicherungsmaterial;
Laminieren des ersten Blattmaterials (102), des zweiten Blattmaterials (104) und des dritten Blattmaterials (110), was zu einem zweiten fertigen Blattmaterial führt; und
Verarbeiten des zweiten fertigen Blattmaterials zu einem fertigen Produkt.

6. Verfahren nach Anspruch 5, ferner umfassend:
Hinzufügen von Samen (310) zum Sicherungsmaterial.

7. Verfahren nach einem der Ansprüche 5 bis 6, wobei die ersten und zweiten Blattmaterialien (102, 110) Auskleidungen umfassen, wobei das Verfahren folgendes umfasst:
Anwenden eines Sicherungsmaterials auf einer dieser Auskleidungen;
Anhaften eines vierten, geriffelten Blattmaterials an dem Sicherungsmaterial;
Anwenden eines Sicherungsmaterials an dem vierten,
geriffelten Blattmaterial;
Anhaften eines fünften Blattmaterials, das eine Auskleidung umfasst, auf dem vierten, geriffelten Blattmaterial; und
Laminieren des ersten bis einschließlich fünften Blattmaterials, um ein doppelwandiges fertiges Blattprodukt zu erzeugen.

8. Verfahren nach einem der Ansprüche 1 bis 7, wobei ein beliebiges der Sicherungsmaterialien ein Haftmittel umfasst.

9. Verfahren nach Anspruch 8, wobei das Haftmittel ein auf Stärke basierendes Haftmittel ist.

10. Verfahren nach einem der Ansprüche 1 bis 9, ferner umfassend:
Mischen von Samen in das Sicherungsmaterial an einer Vorbereitungsstation.

11. Behälter, der dafür angepasst ist, ein Lebensmittel oder Getränk zum Verzehr aufzunehmen, gebildet aus einem Blatt, umfassend:
erste und zweite Blattmaterialien (102, 104), die in einem Blattmaterial-Verarbeitungsmaschinen-System aneinander geklebt werden, wobei das erste Blattmaterial (104) Wellpappe umfasst, das eine Riffelung aufweist, und das zweite Blattmaterial (102) eine Auskleidung umfasst, um eine einwandige Wellpappe zu bilden; und
ein Sicherungsmaterial, das an einer Außenseite entweder des ersten oder des zweiten Blattmaterials (102, 104) angewendet wird, **dadurch gekennzeichnet, dass** mit dem Sicherungsmaterial mehrere Samen (310) vermischt sind, und das Sicherungsmaterial im Wesentlichen frei von Pestiziden, Düngemitteln, stickstoffbindenden Bakterien, Sporen und Wachstumsmitteln ist.

12. Behälter nach Anspruch 11, wobei das Sicherungsmaterial an der Außenseite der Auskleidung angewendet ist, und das Blatt ferner
ein drittes Blattmaterial (110) umfasst, das an der Auskleidung haftet.

13. Behälter nach Anspruch 12, wobei das dritte Blattmaterial (110) eine zweite Auskleidung umfasst.

14. Behälter nach einem der Ansprüche 11 bis 13, wobei die Samen Löwenmäulchen-Blumensamen umfassen, und wobei das Sicherungsmaterial ein auf Stärke basierendes Haftmittel umfasst.

15. Behälter nach einem der Ansprüche 11 bis 14, wobei der gebildete Behälter einen Behälter umfasst, ausgewählt aus der Gruppe bestehend aus: einem doppelwandigen Becher, einem einwandigen Becher, einem Teller, einer Behälterumhüllung, einem Greifmantel, einer Tasche oder einem Tablett.

## Revendications

1. Procédé de fabrication d'un matériau contenant des graines pour un récipient pour aliments ou boissons, comprenant les étapes consistant à :
faire passer un premier matériau en feuilles (102) dans une machine de transformation de matériau en feuilles, le premier matériau en feuilles (102) ayant au moins deux côtés ;
coller un premier côté d'un deuxième matériau en feuilles (104) sur un premier côté du premier matériau en feuilles (102) ;
prémélanger les graines (310) et un matériau de fixation (312) avant de charger le premier matériau de fixation dans la machine ;
appliquer le matériau de fixation (312) sur un deuxième côté du premier ou deuxième matériau en feuilles (102, 104), le matériau de fixation (312) comprenant les graines (310) et étant sensiblement exempt de pesticides, d'engrais, de bactéries fixatrices d'azote, de spores et d'agents de croissance, ce qui produit un premier matériau en feuilles fini ; et
transformer le premier matériau en feuilles fini en un produit fini pour contenir un aliment ou une boisson destiné(e) à la consommation.

2. Procédé selon la revendication 1, comprenant en outre l'étape consistant à :
onduler le premier matériau en feuilles (102) avant de le passer dans la machine, dans lequel le premier matériau en feuilles (102) est un papier ondulé simple face.

3. Procédé selon l'une quelconque des revendications 1 à 2, comprenant en outre l'étape consistant à :
sélectionner un type et une taille de graines (310) pour le prémélange dans le matériau de fixation (312) selon la teneur en eau du matériau de fixation (312) et selon une quantité de chaleur appliquée sur le premier ou deuxième matériau en feuilles (102, 104) pendant la fabrication.

4. Procédé selon l'une quelconque des revendications 1 à 3, dans lequel le deuxième matériau en feuilles (104) est un carton ondulé simple face comprenant des cannelures, et dans lequel le matériau de fixation (312) est appliqué sur le côté du premier matériau en feuilles (102) sur lequel le deuxième matériau en feuilles (104) est appliqué.

5. Procédé selon l'une quelconque des revendications 1 à 4, comprenant en outre les étapes consistant :
appliquer un deuxième matériau de fixation sur le deuxième côté du deuxième matériau en feuilles (104),
le deuxième matériau de fixation étant sensiblement exempt de pesticides, d'engrais, de bactéries fixatrices d'azote, de spores et d'agents de croissance ;
appliquer un troisième matériau en feuilles (110) sur le matériau de fixation ;
stratifier le premier matériau en feuilles (102), le deuxième matériau en feuilles (104) et le troisième matériau en feuilles (110), ce qui produit un deuxième matériau en feuilles fini ; et
transformer le deuxième matériau en feuilles fini en produit fini.

6. Procédé selon la revendication 5, comprenant en outre l'étape consistant à :
ajouter les graines (310) au matériau de fixation.

7. Procédé selon l'une quelconque des revendications 5 à 6, dans lequel les premier et troisième matériaux en feuilles (102, 110) comprennent des doublures, le procédé comprenant en outre les étapes consistant à :
appliquer un matériau de fixation sur l'une des doublures ;
coller un quatrième matériau en feuilles cannelé sur un matériau de fixation ;
appliquer un matériau de fixation sur le quatrième matériau en feuilles cannelé ; et
stratifier les premier à cinquième matériaux en feuilles pour créer un produit en feuilles fini à parois doubles.

8. Procédé selon l'une quelconque des revendications 1 à 7, dans lequel l'un quelconque des matériaux de fixation comprend un adhésif.

9. Procédé selon la revendication 8, dans lequel l'adhésif est un adhésif à base d'amidon.

10. Procédé selon l'une quelconque des revendications 1 à 9, comprenant en outre l'étape consistant à :
mélanger les graines dans le matériau de fixation au niveau d'un poste de préparation.

11. Récipient adapté pour transporter un aliment ou une boisson destiné(e) à la consommation, formé à partir d'une feuille comprenant :
des premier et deuxième matériaux en feuilles (102, 104) collés l'un à l'autre dans une machine de transformation de matériau en feuilles, dans lequel le premier matériau en feuilles (104) comprend du carton ondulé ayant des cannelures et le deuxième matériau en feuilles (102) comprend une doublure, pour former un carton ondulé à paroi simple ; et
un matériau de fixation appliqué sur une partie extérieure du premier ou deuxième matériau en feuilles (102, 104), **caractérisé en ce que** le matériau de fixation comprend une pluralité de graines (310) mélangées et est sensiblement exempt de pesticides, d'engrais, de bactéries fixatrices d'azote, de spores et d'agents de croissance.

12. Récipient selon la revendication 11, dans lequel le matériau de fixation est appliqué sur la partie extérieure de la doublure, et dans lequel la feuille comprend en outre :
un troisième matériau en feuilles (110) collé à la doublure.

13. Récipient selon la revendication 12, dans lequel le troisième matériau en feuilles (110) comprend une deuxième doublure.

14. Récipient selon l'une quelconque des revendications 11 à 13, dans lequel les graines comprennent des graines de muflier, et dans lequel le matériau de fixation comprend un adhésif à base d'amidon.

15. Récipient selon l'une quelconque des revendications 11 à 14, dans lequel le récipient formé comprend un récipient choisi dans le groupe constitué par : une boîte à parois doubles, un boîte à paroi simple, une plaque, une matrice de pot de presse, une coque, un sac et un plateau.
